# EUROPEAN PATENT APPLICATION

(11) **EP 2 105 581 A2**
(43) Date of publication of application: **30.09.2009**
(21) Application number: 09250549.4
(22) Date of filing: 27.02.2009
(51) Int. Cl.: F01D 11/00

(54) **Vane with integral inner air seal**

(30) Priority: 24.03.2008 US 79048
(71) Applicant: United Technologies Corporation, Hartford, CT 06101 (US)
(72) Inventor: Alvanos, Ioannis, West Springfield, MA 01089 (US); Pinero, Hector M., Middletown, CT 06457 (US)
(74) Representative: Tomlinson, Kerry John

(57) **Abstract**

A stator vane segment (44) for a gas turbine engine includes at least one airfoil (108,110) joined to an outer shroud (48) and an inner platform (112). A sealing element having a first platform (72) radially inward of the inner platform and an abradable material (90) covering at least a portion of the first platform is integrally joined to the inner platform.

## Description

### BACKGROUND

The present invention relates generally to gas turbine engines, and more specifically, to a turbine vane segment with an integral air seal and inner platform.

In a gas turbine engine, air is pressurized in a compressor and mixed with fuel in a combustor for generating hot combustion gases. Energy is extracted from the combustion gases in the turbine stages, and extracted for powering the compressor and producing work, which is the thrust to power the engine in aircraft applications.

The high pressure turbine of the engine includes stationary stators, or vanes, at the combustor exhaust which channels the combustion gases into an axially adjacent rotor, or blades mounted to a supporting rotor disk which in turn drives the compressor during operation. The stators include a row of aerodynamic airfoils extending radially between an inner platform and outer shroud.

The stators are supported in the engine either at the outer shrouds, or at the inner platform, and are typically formed in circumferential segments for accommodating thermal expansion and contraction as the hot gases, or working fluid, are discharged from the combustor and between the vanes. The stator components are cooled during operation by using a portion of the pressurized air bled from the compressor in various cooling circuits. The cooling circuits are contained outboard of the outer shroud, or inboard of the inner platform.

It is important that the cooling fluid and working fluids do not mix. To prevent mixing in the stators, various seals are incorporated. In current designs, air seals are fastened to the inner platform to prevent any crossover leakage of the working fluid and cooling fluids. The inner platform typically includes radially extending flanges or similar structures which cooperate with adjoining components of the engine for both mounting and sealing the turbine nozzle therewith. Although the structures are not directly exposed to the hot combustion gases of the turbine flowpath, they provide additional weight and thermal mass which affect performance of the engine. Weight is the paramount design feature in an aircraft engine and must be minimized for maximizing efficiency of the engine. Thermal mass affects thermal stresses generated during operation, and also affects the durability and life of the turbine nozzle.

### SUMMARY

A stator vane segment for a gas turbine engine includes at least one airfoil joined to an outer shroud and an inner platform. A sealing element having a first platform land radially inward of the inner platform and an abradable material covering at least a portion of the first platform is integrally joined to the inner platform.

In another embodiment, a stator for a gas turbine engine includes a plurality of circumferentially spaced vane segments. Each individual vane segment constitutes at least one airfoil that has a concave pressure side and convex suction side extending between a leading edge and a trailing edge joined to an outer shroud and an inner platform. The outer shroud is secured to a case of the gas turbine engine. Each individual vane segment also constitutes an integral sealing element that has at least one platform radially inward from the inner platform joined to the inner platform. An abradable material covers at least a portion of the at least one platform, and a plurality of knife edges engage the abradable material.

In an alternate embodiment, a stator vane segment for a gas turbine engine incorporates at least one airfoil joined to an outer shroud and a first platform. A seal land is integrally joined to the first platform. The sealing element contains a second platform radially inward from the first platform and a third platform radially inward of the second platform. The second platform is connected to the first platform by a forward radial support and an aft radial support, while the third platform is connected to the second platform by a radially extending support. An abradable material covers at least a portion of the second and third platforms.

### BRIEF DESCRIPTION OF THE DRAWINGS

Figure 1 is a schematic of a cross-section of a gas turbine engine.

Figure 2 is a partial cross section of the turbine section of the gas turbine engine of Fig. 1.

Figure 3 is detailed sectional view of an integral air seal and inner platform of a second stage vane in the turbine section of Fig. 2.

Figure 4 is a detailed sectional view of a prior art second stage vane having an inner platform and a separate inner air seal.

Figure 5 is a forward perspective view of a stator vane segment.

Figure 6 is an aft perspective view of the stator vane illustrated in Fig. 5.

Figure 7 is a perspective view of an alternate embodiment of a vane segment.

### DETAILED DESCRIPTION

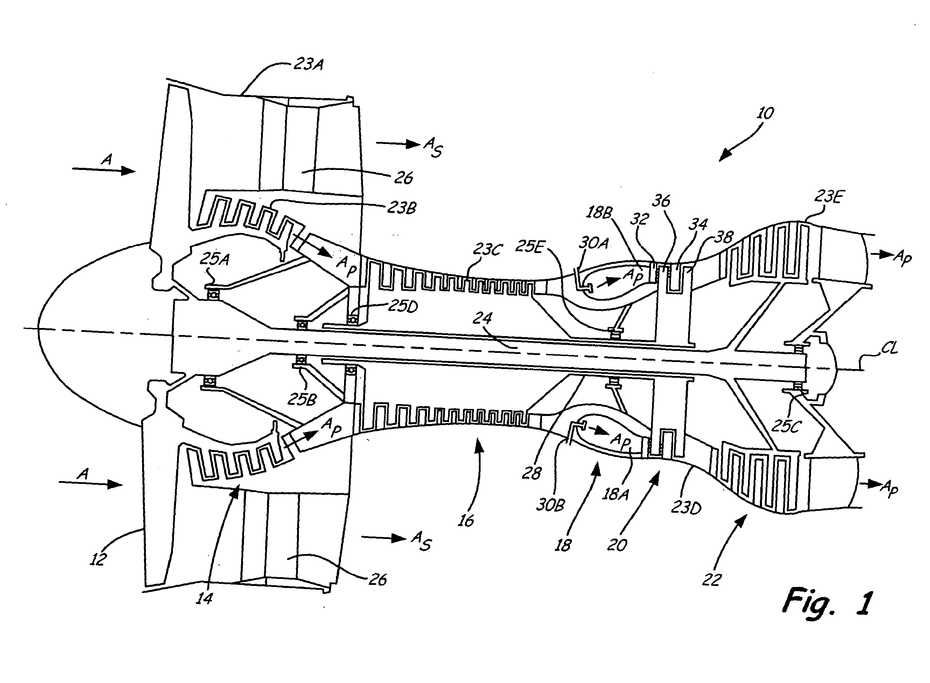

FIG. 1 shows a schematic gas turbine engine 10, in which a vane segment with an integral inner air seal can be used. Gas turbine engine 10 comprises fan 12, low pressure compressor (LPC) 14, high pressure compressor (HPC) 16, combustor section 18, high pressure turbine (HPT) 20 and low pressure turbine (LPT) 22, which are each concentrically disposed around longitudinal engine centerline CL. Fan 12 is enclosed at its outer diameter within fan case 23A. Likewise, the other engine components are correspondingly enclosed at their outer diameters within various engine casings, including LPC case 23B, HPC case 23C, HPT case 23D and LPT case 23E such that an annular air flow path is formed around centerline CL.

Ambient air A enters fan 12 and it is divided into streams of primary air AP and secondary air AS after it passes through fan 12. Fan 12 is rotated by low pressure turbine 22 through shaft 24 to accelerate secondary air AS (also known as bypass air) through exit guide vanes 26, thereby producing a major portion of the thrust output of engine 10. Shaft 24 is supported within engine 10 at ball bearing 25A, ball bearing 25B and roller bearing 25C. Primary air AP (also known as gas path air) is directed first into low pressure compressor (LPC) 14 and then into high pressure compressor (HPC) 16. LPC 14 and HPC 16 work together to incrementally step up the pressure of primary air AP. HPC 16 is rotated by HPT 20 through shaft 28 to provide pressurized air to combustor section 18. Shaft 28 is supported within engine 10 at ball bearing 25D and roller bearing 25E. The pressurized air is delivered to annular combustor 18, illustrated as 18A and 18B, along with fuel through multiple injectors, illustrated as 30A and 30B, such that a combustion process can be carried out to produce the high energy gases necessary to turn turbines 20 and 22. Primary air AP continues through turbine sections 20 and 22 whereby it is typically passed through an exhaust nozzle to further produce thrust.

HPT 20 includes a plurality of stator stages 32, 34, and a plurality of rotor stages 36, 38. Stator stages 32, 34 contain vanes that are cantilevered from HPT casing 23D, and extend radially inward. Rotor stages 36, 38 contain blades that are connected to a rotatable rotor and extend radially outward from shaft 28. Combustion gases exiting combustor 18 are directed by the shape and angle of HPT turbine vanes to impart force against the rotor blades, thus causing rotor stages 36, 38 and shaft 28 to rotate.

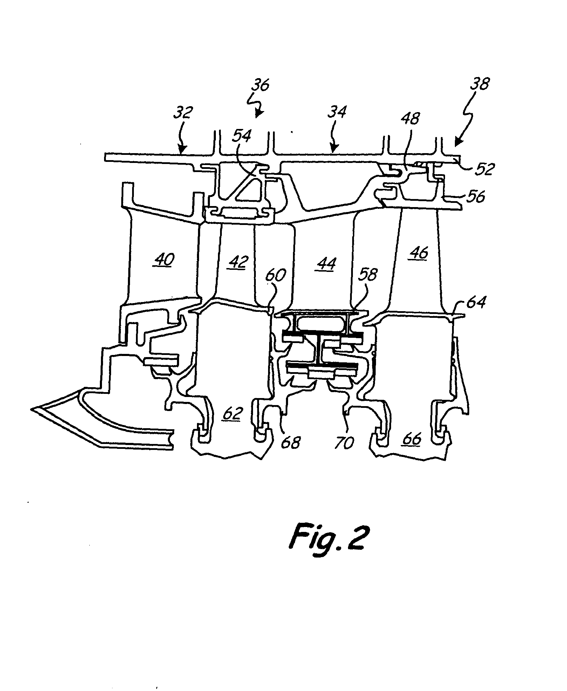

Figure 2 is a partial cross section of the HPT 20, which comprises first stage stator 32, first stage rotor 36, second stage stator 34, and second stage rotor 38. First stage stator 32 and second stage stator 34 contain first stage vane 40 and second stage vane 44, respectively, to receive the flow of combustion gases and direct them to first stage blade 42 and second stage blade 46 of rotor stages 36, 38.

Second stage stator 34 has second stage vane 44 with an airfoil portion contained between outer shroud 48 and integral air seal and inner platform 58. Outer shroud 48 is integral with second stage vane 44, and secures vane 44 to casing 52 in a hook and slot arrangement. Outer shroud 48 may be further supported by adjacent shrouds 54, 56 that are attached to casing 52 and lie radially spaced from the edges of first stage blade 42 and second stage blade 46, respectively. A plurality of like structures extend circumferentially around the centerline CL of the engine to create second stage stator 44, also commonly referred to as a second stage nozzle, of gas turbine engine 10.

First stage blade 42 has inner platform 60 that extends axially rearward to be adjacent integral platform 58 of second stage vane 44, and is attached to rotor disk 62. Similarly, second stage blade 46 has inner platform 64 that extends axially forward to be adjacent integral platform 58 of second stage vane 44, and is attached to second stage rotor disk 66. Blades 42 and 46 are secured to rotor disks 62 and 66, respectively, in part by knife seal mounts 68 and 70. Knife seal mounts 68 and 70 contain knife edges that interact with corresponding abradable surfaces attached to integral platform 58. The interaction of the knife edges and abradable surfaces creates a seal that prevents leakage of compressed cooling air disposed radially below the working fluid flowpath of the turbine into the working fluid.

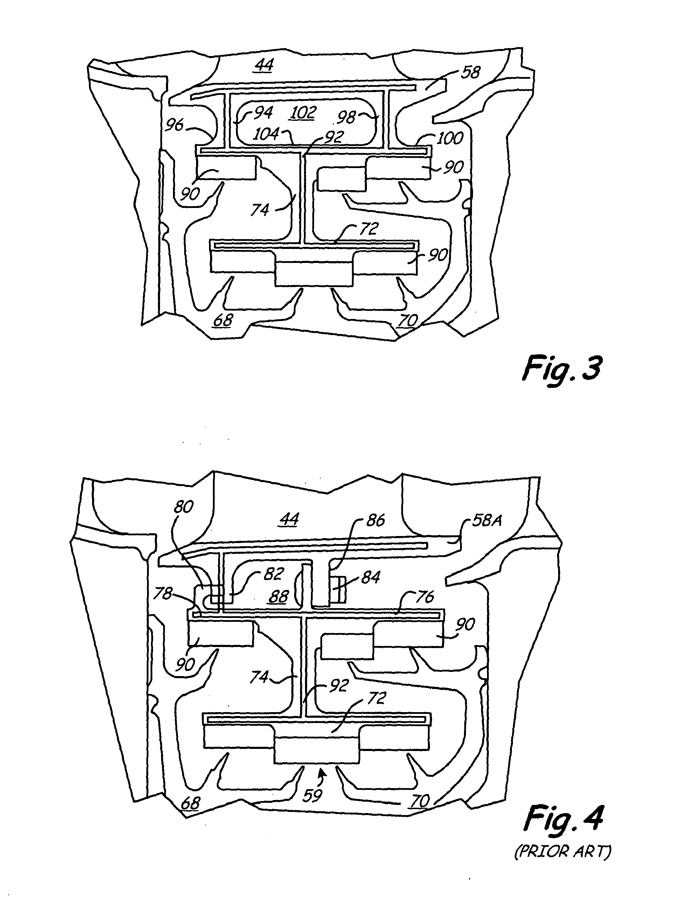

Figure 3 is a detailed sectional view of integral air seal and inner platform 58 of a second stage vane of a gas turbine engine. Figure 4 is a detailed sectional view of a prior art second stage vane having an inner platform 58A and separate inner air seal 59.

In the prior art illustrated in Fig. 4, inner air seal 59 has a lower platform 72 connected to radial support 74, which is attached to another platform radially outward of lower platform 72 and has aft side 76 and forward side 78. Forward side 78 contains a hook 80 that attaches inner air seal 59 to a corresponding counter-hook 82 that extends radially inward from the bottom of inner platform 58A. Radial support 74 extends past forward and aft sides 78 and 76 to mate with extension 86. Extension 86 is generally centrally located on platform 58A and extends radially inward. Both radial support 74 and extension 86 contain apertures for securing the inner air seal 59 to inner platform 58A with a fastener 84, which is commonly a bolt and corresponding nut. An enclosed pocket 88 is created between inner air seal 59 and inner platform 58A between the bottom surface of inner platform 58A, radial support 74, forward side 78, and hook 80 and counter-hook 82. The radially inner sides of forward and aft sides 78 and 76, as well as lower platform 72, contain abradable lands 90. Both inner air seal 59 and inner platform 58A contain slots 92 for the reception of a leaf seal (not illustrated) that bridge the gap between adjacent, circumferential segments.

Integral air seal and inner platform 58, illustrated in Fig. 3, are integrally connected by upper forward and aft radial supports 94 and 98. Aft radial support 98 eliminates extension 86 and fastener 84 contained in the prior art, thus eliminating excess cost, weight and complexity in the engine. Also, the integral design of Fig. 3 allows for moving the aforementioned support structures (extension 86, fastener 84, and radially outer portion of radial support 74) aftward from the generally central location, resulting in aft radial support 98.

Forward side 96 and aft side 100 of radially upper platform 104 extend axially past forward and aft radial supports 94 and 98. Radial support 74 remains generally located near the centers of radially upper platform 104 and lower platform 72. Radially upper platform 104, the bottom of the inner platform, and forward and aft radial supports 98 and 94 create a large pocket 102. With the design of integral air seal and inner platform 58, additional material and weight can be removed from radially upper platform 104 of each segment compared to the radially outer platform illustrated in Fig. 4.

A fluid passage (not illustrated) may extend through inner platform 58 to pocket 102. The fluid passage allows for cavity on-board injection (COBI). That is, secondary air flow inside pocket 102 is discharged into the turbine section in a direction that is in substantial alignment with the fluid flow path exiting the vane trailing edge.

Abradable lands 90 are located on the radially inner surface of lower platform 72, and on forward and aft portions of the radially inner surface of radially upper platform 104. Abradable lands 90 may be an annular honeycomb structure that interacts and cooperates with the knife edges of knife seal mounts 68 and 70 to form the seal. The honeycomb is made of a plurality of open cells that face radially inward. The knife edges define with the cells of abradable strip 90 a labyrinth seal which is effective for maintaining the differential pressure across the second stage nozzle. The face of integral air seal and inner platform 58 also contains slots 92. Flat sealing structures constructed from sheet metal, often referred to as leaf seals or feather seals, bridge the gap between adjacent stator vane segments and are captured by slots 92.
The leaf seals minimize fluid leakage between adjacent stator vane segments.

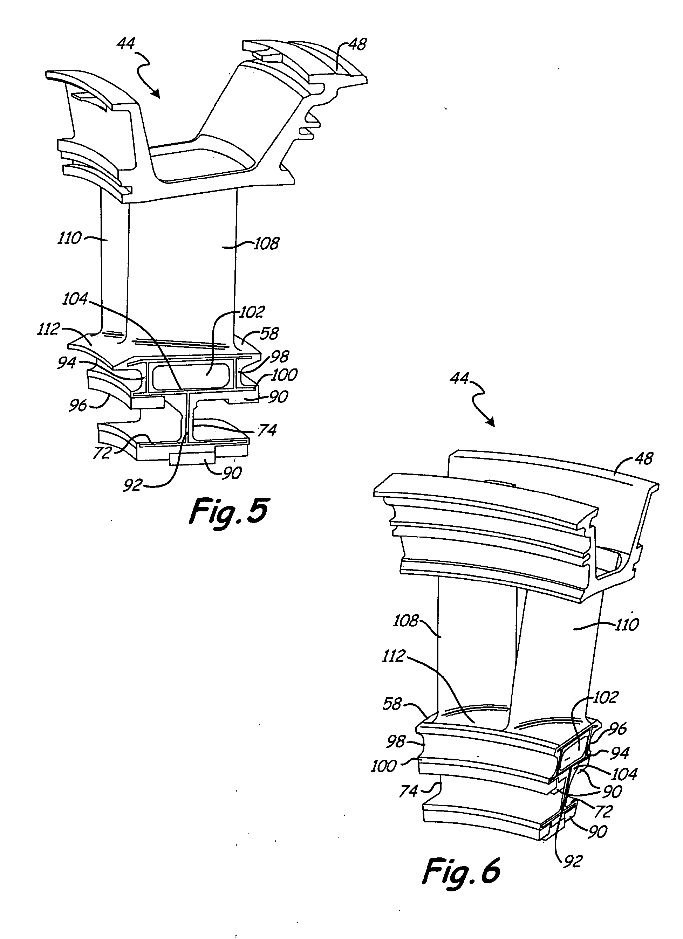

Figure 5 is a forward perspective view of a typical stator vane segment 44. Figure 6 is an aft perspective view of the stator vane segment 44 illustrated in Fig. 5. Stator vane 44 has two airfoils 108, 110 contained between outer shroud 48 and integral air seal and inner platform 58. Airfoils 108, 110 each have a generally concave pressure side and generally convex suction side, and contain a leading edge that first encounters the working fluid and a trailing edge adjacent the working fluid exhaust. Airfoils 108, 110 may contain simple or compound curvatures for receiving the working fluid. The bottom surface of outer shroud 48 and upper surface of integral air seal and inner platform 58 create the working fluid flowpath in which airfoils 108, 110 are contained. A plurality of like segments may be placed adjacent one another to create second stage stator 34 (see Figs. 1 and 2).

Integral air seal and inner platform 58 has flow path platform 112, upper platform 104, and lower platform 72, which are all generally parallel to one another. Platforms 112, 104, and 72 also contain a slight radial curve to facilitate formation of a ring centered about a centerline CL of gas turbine engine 10 as like segments are placed adjacent one another. The bottom surface of outer shroud 48 is likewise curved and parallel to platforms 112, 104, and 72, with each decreasing in length from the outer shroud 48 towards the centerline CL of gas turbine engine 10 to create a generally angled profile of stator vane segment 44.

Radial support 74 extends between radially upper platform 104 and lower platform 72, and in the embodiment illustrated is located generally in the center of the axial extent of platforms 72 and 104. In an alternate embodiment, not illustrated, radial support 74 may be offset to one side of center in the axial direction of platforms 72 and 104.

The bottom surface of flow path platform 112 is connected to radially upper platform 104 by forward radial support 94 and aft radial support 98. In this embodiment, forward radial support 94 and aft radial support 98 are located directly below the leading edges and trailing edges, respectively, of airfoils 108 and 110. This arrangement assures structural integrity of vane segment 44. Radial support 74 is generally parallel to forward radial support 94 and aft radial support 98, and radial support 74 is located medially between forward radial support 94 and aft radial support 98. Pocket 102 is formed by forward radial support 94 and aft radial support 98, upper platform 104, and flow path platform 112. Pocket 102 is a hollow area that may receive additional fluid flow, such as for cooling of vane segment 44.

The underside of lower platform 72 is covered with abradable lands 90, such as a honeycomb seal material. Similarly, a portion of the underside of upper platform 104 has abradable lands 90 secured thereto, including a first land that covers forward side 96 and aft side 100 of radially upper platform 104. The geometry of abradable lands 90 may vary, so long as they are able to interact with the knife edges of knife seals 68 and 70 (See Fig. 3). Both circumferentially outer surfaces of integral air seal and inner platform 58 of vane segment 44 also contain slots 92 for the insertion of sealing elements between adjacent vane segments.

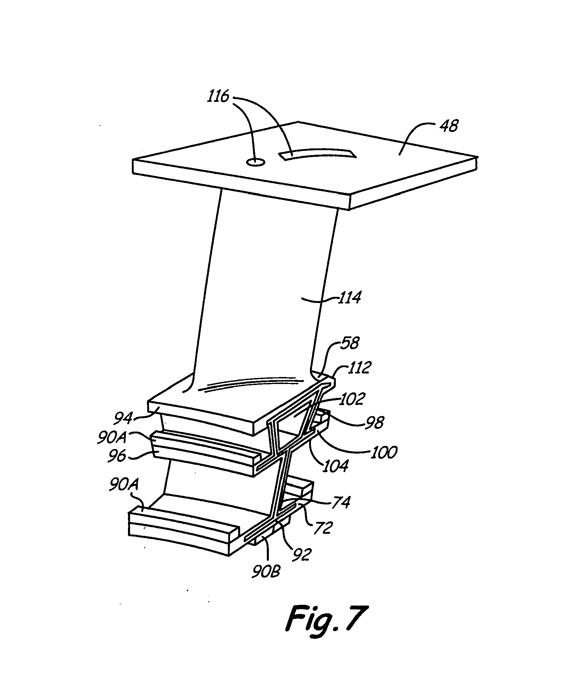

Figure 7 is a perspective view of an alternate embodiment of vane segment 44. In this embodiment, single airfoil 114 is contained between outer shroud 48 and integral air seal and inner platform 58. Flow direction apertures 116 are present in outer shroud 48 to allow for directing a cooling fluid into airfoil 114. The stators and rotors of the HPT operate in some of the highest temperature environments within gas turbine engine 10 and thus cooling of the surfaces exposed to the working fluid flow path is necessary. A portion of air from the compressor is bled from the compressor system to provide cooling fluid to the HPT. In one embodiment, some of the cooling fluid will exhaust into pocket 102.

Integral air seal and inner platform 58 has lower platform 72 connected to upper platform 104 by radial support 74. Upper platform 104 is connected to the bottom surface of inner platform 112 through forward radial support 94 and aft radial support 98. In this embodiment, forward radial support 94 and aft radial support 98 are angled axially inward towards radial support 74. Forward side 96 and aft side 100 of radially upper platform 104 terminate prior to reaching the leading edge and trailing edge of airfoil 114. Lower platform 72 has a greater axial length than radially upper platform 104. In the embodiment illustrated, lower platform 72 is approximately equal in axial length to inner platform 112. In an alternate embodiment, lower platform 72 has a different axial length than inner platform 112.

Lower platform 72 and radially upper platform 104 each contain abradable lands 90A secured to a portion of the upper surfaces. Abradable strips 90A are located towards the forward and aft sides. This geometry and arrangement of vane segment 44 allows for a different design of knife edge seals (not illustrated) wherein the knife edges extend radially inward to abradable lands 90A, rather than radially outward as illustrated in Fig. 4. Further, the length of the knife edge seals can be adjusted according to the axial length of lower platform 72 and radially upper platform 104. In the embodiment illustrated, lower platform 72 also has abradable lands 90B attached to the radially inner surface. This allows for an additional knife edge seal element to be secured directly below vane segment 44.

The shape of pocket 102 as illustrated in Fig. 7 is generally trapezoidal as compared to the generally rectangular shape illustrated in Fig. 3. By adjusting the location and the angle of forward radial support 94 and aft radial support 98, pocket 102 can be shaped to create a desired fluid flowpath for cooling fluids.

Vane segment 44 is made by integrally casting outer shroud 48, airfoil(s) 108, 110, or 114, and integral air seal and inner platform 58 as a single structure. The casting is done using conventional molds or dies, and uses a process such as investment casting. In an alternate embodiment, outer shroud 48, airfoil(s) 108, 110, or 114, and integral air seal and inner platform 58 are each cast separately. The cast parts are then assembled together, held in position by a fixture so that they can be secured to one another by brazing or welding.

Stator vane segment 44 incorporating integral air seal and inner platform 58 results in many advantages over the prior art containing separate structures for the air seal and inner platform. Providing an integral air seal and inner platform 58 removes the joints and other interfaces between the air seal and inner platform. This eliminates the need for pins, bolts, hooks, and similar fasteners. Also, the part count of the stator stage is reduced. Elimination of the interface with a fastener allows for creating a shorter radial distance between the radially upper platform 104 and inner fluid flowpath platform 112. Thus, the overall height of vane segment 44 is reduced. This saves on material and overall engine weight. Additionally, this allows the abradable lands 90 and corresponding knife edge seals to be moved outboard.

Elimination of the interface between air seal 59 and inner platform 58A (See Figs. 3 and 4) also allows for creation of a smoother and more complete configuration for slots 92 and corresponding feather seals. Potential ingestion of the working fluid into the inboard hardware is reduced with the integral air seal and inner platform 58 as a result of the feather seal configuration, as well as with the corresponding elimination of joints or interfaces. The location of forward radial support 94 and aft radial support 98 can be adjusted to create a desired cooling fluid flow path in pocket 102 without the worry of potential leakage of the cooling fluid. No fasteners or similar extensions into pocket 102 disrupt the flow of the cooling fluid. Similarly, this adjustable location allows for moving of extension 86 (see Figs. 3 and 4) as there is no need to worry about access to fastener 84 with tools to secure fastener 84.

The overall weight of vane segment 44 is also reduced compared to a separate vane and inner air seal. The elimination of the fastener 84 and rail 86 decreases weight. By moving the position of the aft radial support 98, additional material can be removed from pocket 102. Material from the radially upper platform above radial support 72 can be removed without affecting the structural integrity of vane segment 44. The reduction of weight associated with integral platform 58 helps reduce overall fuel bum.

Vane segment 44 containing integral air seal and inner platform can be incorporated into single airfoil segments, doublets, quads or more. The more airfoils per segment helps reduce potential leakage. Vane segment 44 is designed to minimize leakage and minimize weight while assuring that all structural requirements and heat loads are adequately accounted for.

Although the present invention has been described with reference to preferred embodiments, workers skilled in the art will recognize that changes may be made in form and detail without departing from the scope of the invention, which is defined by the claims and their equivalents.

Important preferred features of the invention are that the forward radial support, aft radial support, and radially extending support are all generally parallel; alternatively the forward radial support and aft radial support are angled with respect to the radially extending support ; that the first 102, second 104, and third 72 platforms are all generally parallel; that the first platform is axially longer than the second platform; and that the second platform is axially longer than the third platform.

## Claims

1. A stator vane (44) segment for a gas turbine engine comprising:
at least one airfoil (108,110;114) joined to an outer shroud (48) and an inner platform (112); and
a sealing element integrally joined to the inner platform, the sealing element having a first platform (72) radially inward from the inner platform and an abradable material (90) covering at least a portion of the first platform.

2. The stator vane segment of claim 1 further comprising:
a plurality of airfoils (108;110) joined to the outer shroud and inner platform.

3. The stator vane segment of claim 1 or 2 wherein the sealing element further comprises:
a second platform (104) radially inward from the inner platform.

4. The stator vane segment of claim 3 wherein the abradable material (90) covers at least a portion of the second platform.

5. The stator vane segment of claim 3 or 4 wherein the first platform (72) is attached to the second platform (104) by at least one radially extending support (74).

6. The stator vane segment of claim 5 wherein the second platform (104) is connected to the inner platform (112) by a forward radial support (94) and an aft radial support (98).

7. The stator vane segment of claim 6 wherein the forward radial support (94), aft radial support (98), inner platform (112), and second platform (104) define a pocket.

8. The stator vane segment of any preceding claim wherein the abradable material (90) is a honeycomb structured material.

9. The stator vane segment of any preceding claim wherein the sealing element further comprises:
a first circumferentially outer surface and a second circumferentially outer surface;
at least one slot contained on each circumferentially outer surface of the sealing element.

10. The stator vane segment of any preceding claim wherein the inner platform has a first circumferentially outer surface and a second circumferentially outer surface, and wherein each circumferentially outer surface of the inner platform has at least one slot.

11. A stator for a gas turbine engine, the stator comprising:
a plurality of circumferentially spaced vane segments, each individual vane segment having at least one airfoil joined to an outer shroud and an inner platform, wherein the airfoil has a concave pressure side and convex suction side extending between a leading edge and a trailing edge, and wherein the outer shroud is secured to a case of the gas turbine engine;
a sealing element integrally joined to the inner platform, the sealing element having at least one platform radially inward from the inner platform, and an abradable material covering at least a portion of the at least one platform; and
a plurality of knife edges that engage the abradable material.

12. The stator of claim 11 wherein the at least one platform is joined to the inner platform by a forward support (94) below the leading edge of the airfoil and an aft support (98) below the trailing edge of the airfoil.

13. The stator of claim 11 or 12 further wherein the abradable material covers an axially forward portion and an axially aft portion of the at least one platform.

14. The stator of claim 11, 12 or 13 further wherein the abradable material covers a portion of the bottom surface of the at least one platform.

15. A stator vane segment for a gas turbine engine comprising:
at least one airfoil joined to an outer shroud and a first platform;
a sealing element integrally joined to the first platform, the seal having a second platform radially inward from the first platform, wherein the second platform is connected to the first platform by a forward radial support and an aft radial support, and a third platform radially inward of the second platform, wherein the third platform is connected to the second platform by a radially extending support; and
an abradable material covering at least a portion of the second platform and a portion of the third platform.
